# EUROPEAN PATENT APPLICATION

(11) **EP 4 761 179 A1**
(43) Date of publication of application: **17.06.2026**
(21) Application number: 25214027.2
(22) Date of filing: 06.11.2025
(51) Int. Cl.: H04L 9/40, H04W 12/08, H04W 12/71, H04W 12/75, H04W 12/02

(54) **CONSISTENT PROFILING OF CLIENTS EXHIBITING MULTIPLE IDENTIFIERS**

(30) Priority: 13.12.2024 US 202418980222
(71) Applicant: Arista Networks, Inc., Santa Clara, CA 95054 (US)
(72) Inventor: Balasubramanian, Karthikeyan, Santa Clara, CA, 95054 (US); Vadivel, Devakumar, Santa Clara, CA, 95054 (US)
(74) Representative: Hoffmann Eitle

(57) **Abstract**

A client device may be communicatively coupled to a network via a network device such as a wireless access point. The client device may use a first client device identifier to access the network at a first time and may use a second client device identifier to access the network at a second time. A client device profiling system may generate a client profile for the client device to identify the first client device identifier and may update the client profile to identify the second client device identifier based on determining that the second client device identifier is an updated client device identifier of the client device.

## Description

This application claims priority to U.S. patent application No. 18/980,222, filed December 13, 2024, which is hereby incorporated by reference herein in its entirety.

### Background

A communication system can include multiple network devices that are interconnected to form a network for conveying network traffic between hosts. Hosts can include client devices that are connected to the network via wireless access points. To facilitate network access control, network analysis, and/or other functions, respective client profiles for corresponding client devices can be generated.

### Brief Description of the Drawings

FIG. 1 is a diagram of an illustrative networking system having a server communicatively coupled to a network device in accordance with some embodiments.
FIG. 2 is a diagram of an illustrative wireless access point in accordance with some embodiments.
FIG. 3 is a diagram of an illustrative client profile for a client device in accordance with some embodiments.
FIG. 4 is a timing diagram for illustrative communications between a client device, a wireless access point, and a network access control system using a first client identifier in accordance with some embodiments.
FIG. 5 is a timing diagram for illustrative communications between a client device, a wireless access point, and a network access control system using a second client identifier in accordance with some embodiments.
FIG. 6 is a diagram of an illustrative wireless access point configured to propagate client profile information to other network nodes in accordance with some embodiments.
FIG. 7 is a flowchart of illustrative operations for performing consistent client profiling in response to a client identifier update in accordance with some embodiments.

### Detailed Description

A network can include network devices for conveying network traffic, e.g., in the form of frames, packets, etc., between hosts or generally between devices in the network. Network devices may include wireless access points that provide wireless network portion(s) of the network. Hosts may include client devices that are communicatively coupled (wirelessly) to the wireless access points to connect to and access the network.

A client device may establish one or more communication sessions (e.g., authenticated network access sessions) with a wireless access point using a first client identifier (e.g., a first Media Access Control (MAC) address) over a first time period. At a particular time (e.g., based on a periodicity of client identifier updates implemented by the client device), the client device may update (e.g., change) its identifier to a second client identifier (e.g., a second MAC address) that replaces the first client identifier. The client device may subsequently establish one or more communication sessions with the wireless access point using the second client identifier over a second time period. In some illustrative configurations described herein as an example, these client identifiers may be locally administered MAC addresses that are not tied to (e.g., are different from) the actual hardware address of the client device and its hardware components. If the change(s) in client identifiers over time are not accounted for during client device profiling, multiple separate profiles (based on respective client identifiers) may be generated and maintained for the same client device. This can cause the maintained client profiles to misrepresent the actual state of client devices, thereby misleading users and/or other computing equipment that make use of client profiles when performing analysis and/or taking other actions.

Accordingly, processing circuitry of a client device profiling system (e.g., a network access control server) may be configured to perform consistent profiling of each client device based on client fingerprint data and other information usable to identify client identifier updates. In such a manner, information for a client device can be consolidated into a single client profile even as its client identifier is updated over time. Doing so may provide a more accurate representation of client devices using client profiles, thereby facilitating improved (e.g., more accurate, better informed, etc.) network analysis, network management, network access control, and/or other network actions to be performed based on the client profiles.

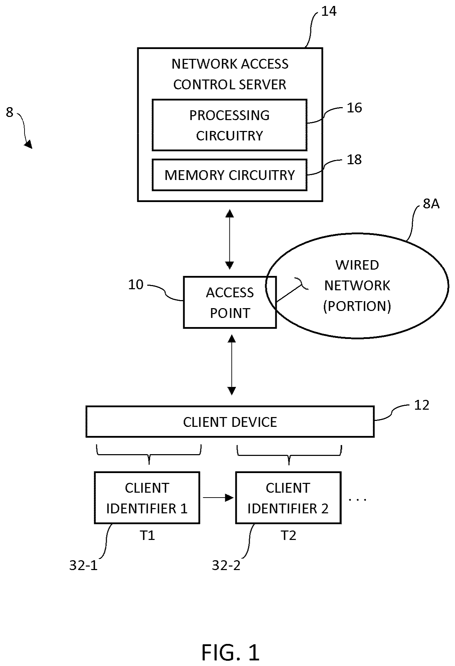

An illustrative networking system in which client device profiling (e.g., consistent client profiling as described above) is performed is shown in FIG. 1. In the example of FIG. 1, the networking system may include one or more components of a network such as network 8. Network 8 may have any suitable scope. As examples, network 8 may include, be, and/or form part of one or more local segments, one or more local area networks (LANs), one or more local subnets, one or more campus area networks, one or more metropolitan area networks, one or more wide area networks, one or more cloud networks, one or more data center networks, etc. Network 8 may include a wired network (portion) based on wired technologies or standards such as Ethernet (e.g., using copper cables and/or fiber optic cables) and a wireless network (portion) such as one or more wireless local area networks (WLANs) (e.g., wireless networks compliant with the IEEE 802.11 standard(s)). If desired, network 8 may include internet service provider networks (e.g., the Internet) or other public service provider networks, private service provider networks (e.g., multiprotocol label switching (MPLS) networks), and/or other types of networks such as telecommunication service provider networks.

Network 8 may be implemented using network devices that handle (e.g., process by modifying, forwarding, routing, etc.) network traffic to convey information between end hosts and/or generally between devices. Network 8 can include networking equipment forming a variety of network devices that interconnect the end hosts of network 8. Network devices in network 8 may include wireless access points, network switches (e.g., multi-layer (Layer 2 and Layer 3) switches, single-layer (Layer 2) switches, etc.), bridges, routers, gateways, hubs, repeaters, firewalls, devices serving other networking functions, management devices that manage and control the operation of network device(s), or devices that include the functionality of two or more of these devices.

End hosts of network 8 may include computers, servers, portable electronic devices such as cellular telephones, laptops, etc., other types of specialized or general-purpose host computing equipment (e.g., running one or more client-side and/or server-side applications), network-connected appliances or devices such as cameras, wireless sensors, medical or health sensors, lighting fixtures, speakers, printers, or other network-connected equipment that serves as input-output devices or computing devices in a distributed networking system, devices used by network administrators (sometimes referred to as administrator devices), network service and/or analysis devices, or management devices that manage and control the operation of one or more of other end hosts and/or network devices.

In the example of FIG. 1, one of the network devices in network 8 is wireless access point 10. Wireless access point 10 may be communicatively coupled to one or more end hosts or client devices such as client device(s) 12 (sometimes referred to as end host(s) 12 or host(s) 12) via corresponding wireless link(s). Wireless access point 10 may also be communicatively coupled to a wired network (portion) 8A of network 8. As an example, wired network (portion) 8A may include a network switch (or another type of network device) that is communicatively coupled to wireless access point 10 via a wired link. Wireless access point 10 may provide a wireless network through which client device 12 is communicatively coupled to wired network portion 8A and generally other portions of network 8.

While a single access point 10 is shown in the example of FIG. 1, this is merely illustrative. If desired, there may be multiple access points 10 (e.g., of the same type as access point 10 described herein) that provide the wireless network. Different client devices 12 may connect to each of the multiple access points 10. Sometimes, one or more client devices 12 may move from being connected to the wireless network via a first access point 10 to being connected to the wireless network via a second access point 10 (e.g., as part of client device roaming).

To ensure that hosts, such as client device 12, are authorized to connect to and access network 8 and to provide accounting of activities of authorized hosts, a network access control system may be communicatively coupled to network 8 (e.g., via wireless access point 10 and other network devices therein). In some illustrative configurations described herein as an example, the network access control system may be implemented on server equipment, e.g., as a network access control server 14. The server equipment on which network access control server 14 is implemented may include server hardware such as one or more blade servers, one or more rack servers, and/or one or more tower servers. Compute device(s) and storage device(s) for implementing the functions of network access control server 14 may be provided as part of the server hardware. The compute device(s) may form processing circuitry 16 of server 14, and the storage device(s) may form memory circuitry 18 of server 14. In one illustrative arrangement, network access control server 14 may be implemented as an end host of network 8 and may be communicatively coupled to wireless access point 10 through network devices of network 8.

Processing circuitry 16 (e.g., server compute device(s)) may include one or more processors such as central processing units (CPUs), graphics processing units (GPUs), microprocessors, general-purpose processors, host processors, microcontrollers, digital signal processors, programmable logic devices such as field programmable gate array (FPGA) devices, application specific system processors (ASSPs), application specific integrated circuit (ASIC) processors, and/or other types of processors.

Memory circuitry 18 (e.g., server storage device(s)) may include non-volatile memory (e.g., flash memory, electrically-programmable read-only memory, solid-state drive, hard disk drive storage, etc.), volatile memory (e.g., static or dynamic random-access memory), removable storage devices (e.g., storage devices removably coupled to server equipment), and/or other types of memory circuitry. Processing circuitry 16 may be communicatively coupled to memory circuitry 18 via one or more signal paths (e.g., a data bus) on which data, control signals, and/or other information are conveyed therebetween. Processing circuitry 16 and/or memory circuitry 18 may also be communicatively coupled to other components of server 14 (e.g., network interfaces through which server 14 is communicatively coupled to network devices of network 8 such as access point 10) via one or more signal paths on which data, control signals, and/or other information are conveyed therebetween.

In general, memory circuitry 18 may include one or more non-transitory (tangible) computer-readable storage media that store the operating system software and/or any other software code, sometimes referred to as program instructions, software, data, instructions, or code. Processing circuitry 16 may run (e.g., execute) an operating system and/or other software (including firmware) stored on the one or more non-transitory computer-readable storage media to perform the operations of server 14 described herein. In other illustrative arrangements, the network access control system for network 8 may be implemented locally on wireless access point 10, implemented on another network device or host of network 8, and/or implemented using non-server computing equipment, in place of or in addition to providing a network access server 14.

Server 14 may provide, based on processing circuitry 16 executing instructions stored on memory circuitry 18, one or more network access control services for authorizing network access by different entities (e.g., by authorizing client device network access). When authorizing network access, server 14 may exchange messages with wireless access point 10 (e.g., serving as the authenticator) to authenticate client device 12 for network access. These messages may be exchanged via any suitable communication path. As an example, these communication paths (e.g., communication path(s) between wireless access point 10 and server 14) may include (wired) network paths through a wired network (e.g., through network portion 8A and the network devices therein, using the Internet, etc.). If desired, wireless access point 10 may be directly connected to server 14 without other intervening network devices.

If desired, network access control server 14 may be or form part of an authentication, authorization, and accounting (AAA) server. In some illustrative configurations described herein as an example, network access control server 14 may be a Remote Authentication Dial-In User Service (RADIUS) server that uses the RADIUS protocol to perform AAA operations (e.g., by communicating with wireless access point 10). If desired, other implementations for network access control server 14 may be used.

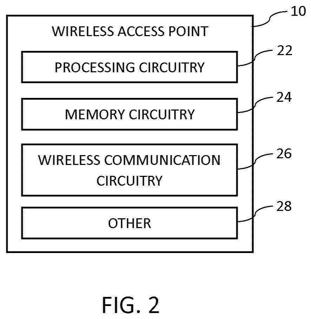

FIG. 2 is a diagram of an illustrative network device (e.g., wireless access point 10 of FIG. 1). As shown in FIG. 2, wireless access point 10 may include processing circuitry 22, memory circuitry 24, wireless communication circuitry 26, and other components 28 such as input-output interfaces or ports.

Processing circuitry 22 may include one or more processors such as central processing units (CPUs), graphics processing units (GPUs), microprocessors, general-purpose processors, host processors, microcontrollers, digital signal processors, programmable logic devices (e.g., field programmable gate array (FPGA) devices), application specific system processors (ASSPs), application specific integrated circuit (ASIC) processors, and/or other types of processors.

Processing circuitry 22 may run (e.g., execute) a network device operating system and/or other software (including firmware) that is stored on memory circuitry 24. Memory circuitry 24 may include one or more non-transitory (tangible) computer-readable storage media that store the operating system software and/or any other software code, sometimes referred to as program instructions, software, data, instructions, or code. In particular, memory circuitry 24 may include non-volatile memory (e.g., flash memory, electrically-programmable read-only memory, solid-state drive, hard disk drive storage, etc.), volatile memory (e.g., static or dynamic random-access memory), removable storage devices (e.g., storage devices removably coupled to wireless access point 10), and/or other types of memory circuitry.

In general, the operations of wireless access point 10 described herein may be stored as (software) instructions on one or more non-transitory computer-readable storage media (e.g., part of memory circuitry 24) in wireless access point 10. The corresponding processing circuitry (e.g., processing circuitry 22) in wireless access point 10 for these one or more non-transitory computer-readable storage media may process the respective instructions to perform the corresponding wireless access point operations. At least some portions of processing circuitry 22 and at least some portions of memory circuitry 24, collectively, may sometimes be referred to herein as the control circuitry of wireless access point 10 because the two portions are often collectively used to control one or more other components of wireless access point 10 (e.g., by exchanging requests, responses, control signals, data, and/or other information with the one or more other components) to perform wireless access point functions.

Wireless access point 10 may include wireless communication circuitry 26 configured to communicate wirelessly with client devices (e.g., client device 12 in FIG. 1) and generally provide wireless communication capabilities. Wireless communication circuitry 26 may include one or more radios, radio-frequency transceiver circuitry, radio-frequency front-end circuitry, and one or more antennas. The one or more radios may use the one or more antennas to transmit radio-frequency signals to and to receive radio-frequency signals from one or more client devices. While wireless communication circuitry 26 is shown as a separate element from processing circuitry 22, this is merely illustrative. If desired, portions of wireless communication circuitry 26 (e.g., radio functionalities) may be implemented as a portion of processing circuitry 22.

Wireless access point 10 may include other components 28 such as one or more input-output interfaces or ports (on which some interfaces are implemented). As an example, these ports may include Ethernet ports or other types of network interfaces that generally provide wired connectivity to other network nodes in network 8 (e.g., switches, routers, modems, controllers, servers, client devices, etc.), management ports through which wireless access point 10 is controlled and managed, power ports through which power is supplied to wireless access point 10, and/or other types of ports. In general, these input-output components and/or wireless communication circuitry 26 may provide external communication interfaces (e.g., wireless personal area network interfaces, wireless local area network interfaces, Ethernet interfaces, optical interfaces at one or more optical ports, and/or other networking interfaces) for connecting wireless access point 10 to a wireless local area network, a local area network, the Internet, a wide area network, a mobile network, other types of networks, and/or to external devices such as other network device(s) and client device(s) in network 8, peripheral devices (e.g., a display), and/or other external equipment.

If desired, wireless access point 10 may include other components such as power supply components, power management components, interconnect structures such as a system bus that communicatively couple the internal components of device 10 to one another, to power supply and/or management components, to the control circuitry, etc. In particular, the control circuitry (e.g., processing circuitry 22 and/or memory circuitry 24) of device 10 may be communicatively coupled to other components of device 10 via one or more paths (in the system bus or elsewhere) that enable the reception and transmission of control signals, data, and/or other information therebetween.

Referring back to FIG. 1, a client device profiling system (e.g., server 14) may perform client device profiling for client devices communicatively coupled (wirelessly) to wireless access points in network 8. In particular, the process of client device profiling may include identifying a particular client device, gathering information on the identified client device (e.g., characteristics of the identified client device, information on network traffic conveyed to and from the identified client device, etc.), and/or storing the gathered information in a corresponding client (device) profile, among other operations. As examples, client device profiling of client devices and the client profiles generated therefrom may help facilitate the monitoring of network activity (e.g., client activity), may help facilitate detection of network issues (e.g., network security issues, network performance issues, etc.) such as by performing root cause analysis, and generally help enhance visibility into the workings of the network. In the example of FIG. 1, client device 12 may be communicatively coupled to wireless access point 10. Server 14 may perform client device profiling for client device 12 to generate and maintain a client profile for device 12.

While client device profiling is often described herein to be performed for a client device 12, the client device profiling system (e.g., server 14 and processing circuitry 16 thereof) may similarly perform client device profiling for other client devices of network 8 communicatively coupled to access point 10 and/or to other access points of network 8. In such a manner, the client device profiling system may generate a corresponding client profile for each corresponding client device.

Client device profiling may be performed based at least in part on a client device identifier (sometimes referred to as a client identifier) provided by a client device to a wireless access point to identify the client device. Configurations in which client identifiers are in the format of a Media Access Control (MAC) address are sometimes described herein as an illustrative example. If desired, the embodiments described herein may similarly be applicable to other types of client identifiers (e.g., client identifies in other formats) used to identify the client device in the corresponding client profile and when communicating with network nodes of network 8.

However, client identifiers used by the same client device to communicate with a wireless access point may change over time (e.g., client identifiers used by the client device may be updated periodically by the client device). As an example described in connection with FIG. 1, client device 12 may establish one or more communication sessions (e.g., authenticated network access sessions) with wireless access point 10 using a first client identifier 32-1 (e.g., a first MAC address) over a first time period T1. At a particular time (e.g., based on a periodicity of client identifier updates implemented by client device 12), client device 12 may update (e.g., change) its identifier to a second client identifier 32-1 (e.g., a second MAC address) that replaces first client identifier 32-1. Client device 12 may subsequently establish one or more communication sessions with access point 10 using second client identifier 32-2 over a second time period T2. In some scenarios, client device 12 may continually update its identifier in this manner to a third client identifier, to a fourth client identifier, etc., over time (e.g., at regular intervals and/or in response to other client device event(s) or criteria).

In some illustrative configurations described here as an example, these client identifiers 32 may be locally administered MAC addresses not tied to the actual hardware address of client device 12 and the hardware components thereof. The changing of these client identifiers may occur automatically (e.g., may be performed automatically by client device 12 at predetermined intervals) as part of MAC address rotation implemented on client device 12.

If these changes in client device identifiers across time are not accounted for during client device profiling, separate client profiles (based on respective client device identifiers) may be created and maintained for the same client device. Accordingly, this inconsistency, if left unaddressed, may misrepresent the state of client devices in the network and corresponding information collected for the client devices, thereby impairing network visibility and causing other issues (e.g., faulty analysis of network data based on imprecise client profiles, faulty network configuration based on imprecise client profiles, etc.).

To mitigate these issues, a client device profiling system (e.g., implemented by a server such as server 14) may be configured to perform operations to generate a (single) consistent client profile for each client device, even as multiple client identifiers are used by that client device over time to communicate with wireless access point(s) of network 8. Configurations in which a network access control server 14 (e.g., processing circuitry 16, when executing corresponding instructions stored on memory circuitry 18) is configured to generate and/or maintain client profiles in the manner described herein are sometimes described herein as an example. If desired, in addition to or instead of network access control server 14, wireless access points or other types of systems (e.g., another dedicated server, other non-server computing equipment, or generally, processing circuitry in other systems when executing software instructions stored on memory circuitry) may be configured to generate and/or maintain the client profiles in the manner described herein.

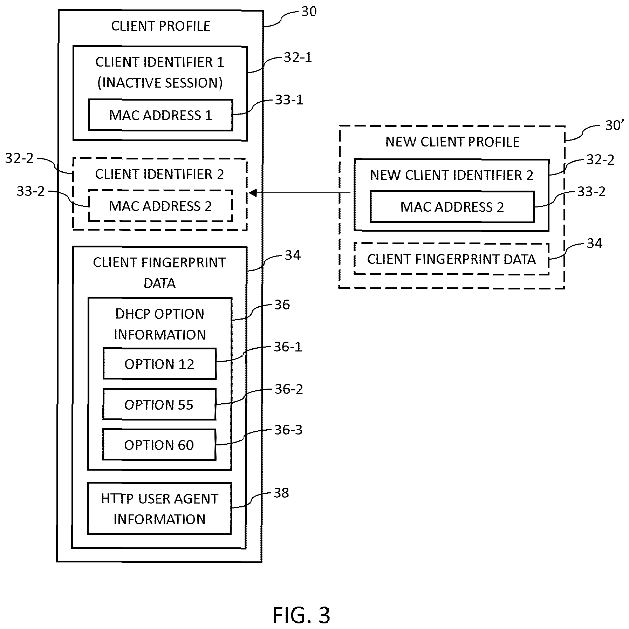

In particular, the client device profiling system (e.g., server 14) may generate a client profile for a client device and may reconcile changes to the client identifier of the client device by updating the existing client profile. FIG. 3 is a diagram of an illustrative client profile 30 that is generated and consistently maintained by the client device profiling system (e.g., by processing circuitry 16 of server 14). In particular, as client profile 30 is maintained over time, the client device profiling system may identify multiple client identifiers (or at least the most up-to-date client identifier(s)) in client profile 30, thereby associating any updated client identifiers with the same client device 12 represented by the single client profile 30.

Client profile 30 may be a profile for client device 12 (FIG. 1) generated by processing circuitry 16 of server 14, stored on memory circuitry 18 of server 14, and maintained (e.g., periodically updated) by processing circuitry 16. When initially generated, client profile 30 may identify (e.g., include, be associated with, etc.) a first client identifier 32-1, such as MAC address 33-1, identifying client device 12.

When initially generated, client profile 30 may also identify (e.g., include, be associated with, etc.) client fingerprint data 34. Client fingerprint data 34 may include different types of information that, when taken in combination, can differentiate between client device 12 and other client devices. In some illustrative configurations sometimes described herein as an example, client fingerprint data 34 may include information specified in Dynamic Host Configuration Protocol (DHCP) options (sometimes referred to as DHCP option information 36) and information contained in messages for Hypertext Transfer Protocol (HTTP) sent by an HTTP user agent executing on processing circuitry of client device 12 (sometimes referred to as HTTP user agent information 38). Client fingerprint data 34 (e.g., DHCP option information 36 coupled with HTTP user agent information 38) may be uniquely associated with and unique to client device 12. In other words, fingerprint data 34 collected for client device 12 may differ from corresponding fingerprint data collected for any other client device connected to network 8.

As just a few specific examples, client fingerprint data 34 may include (e.g., as part of DHCP option information 36) the hostname of client device 12 (e.g., as information 36-1 specified in DHCP option 12 for client hostname), may include a list of DHCP parameters requested by client device 12 (e.g., as information 36-2 specified in DHCP option 55 for DHCP parameter request list), and/or may include client device vendor and/or model information (e.g., as information 36-3 specified in DHCP option 60 for vendor class identifier). Hostnames of client devices may be unique. In other words, the hostname of client device 12 may be different from the hostname of any other client device connected to network 8. In general, DHCP option information 36 may include any information specified in or identified using DHCP options (e.g., in DHCP messages sent by client device 12).

As some additional examples, client fingerprint data 34 may include (e.g., as part of HTTP user agent information 38) different types of information associated with client device 12 in the context of a web browser application executing on the processing circuitry of device 12. These different types of information may include browser information identifying the web browser application executing on device 12 (e.g., web browser vendor or provider, web browser application version, etc.), client device platform information identifying the client device operating system or generally the computing or software platform on which the web browser application is executing (e.g., client device platform vendor or provider, client device operating system vendor or provider, platform and/or operating system version, etc.), and/or client device type information (e.g., desktop, mobile, tablet, etc.), among other examples. In general, HTTP user agent information 38 may include any information specified in or identified using a user-agent header in the HTTP header (e.g., in HTTP request messages sent by client device 12).

Client identifier 32-1 (e.g., MAC address 33-1) may be used by client device 12 to establish a first (client device) communication session (e.g., a first authenticated network access session) with wireless access point 10 (FIG. 1) and to transmit and receive network traffic during the first session. In particular, the network traffic that establishes the first session and the network traffic that is conveyed during the first session may have a header field (e.g., in the Ethernet frame header) that includes MAC address 33-1 identifying client device 12. Wireless access point 10 may provide client identifier 32-1 to server 14 (e.g., processing circuitry 16) as part of the client authentication operations and/or as part of other operations that facilitate client device profiling. Processing circuitry may consequently identify client identifier 32-1 (e.g., MAC address 33-1) in client profile 30.

During the first session, server 14 (e.g., processing circuitry 16) may obtain client fingerprint data 34, including DHCP option information 36 and/or HTTP user agent information 38, e.g., forwarded from access point 10 to processing circuitry 16 within (RADIUS) accounting packets (or within other types of network traffic) generated based on client device traffic during the first session. In other words, access point 10 may monitor the network traffic transmitted by client device 12 during the first session (e.g., passing through access point 10 and/or to other portions of network 8) to obtain client fingerprint data 34 (e.g., from values in the header fields of the network traffic) and may convey the obtained client fingerprint data 34 to processing circuitry 16 of server 14. Processing circuitry 16 may consequently identify the client fingerprint data 34 in the same client profile 30 as client identifier 32-1 used by client device 12 to establish the session, and if desired, may identify other client information (e.g., a username used for authenticating network access) in client profile 30.

After the first session expires, client device 12 may use a (updated or replacement) second client identifier 32-2 (e.g., a second MAC address 33-2), instead of first client identifier 32-1, to establish a second (client device) communication session (e.g., a second authenticated network access session) with wireless access point 10. Similar to the operations described above in connection with the first session, server 14 (e.g., processing circuitry 16) may obtain client identifier 32-2 (e.g., as part of the client authentication operations and/or as part of other operations) and may obtain client fingerprint data 34, including DHCP option information 36 and/or HTTP user agent information 38, e.g., forwarded from access point 10 to processing circuitry 16 (e.g., within (RADIUS) accounting packets or other types of network traffic) generated based on client device traffic during the second session.

After obtaining client identifier 32-2, processing circuitry 16 may identify or determine client identifier 32-2 to be an updated client identifier for client device 12 that replaces client identifier 32-1 (e.g., used by client device 12 to connect to and access network 8, in place of client identifier 32-1). Processing circuitry 16 may make this identification or determination based on one or more criteria being met.

As one example, processing circuitry 16 may compare the client fingerprint data 34 obtained as part of the first client device communication session with the client fingerprint data 34 obtained as part of the second client device session (e.g., compare one or more, or all, comparable pieces of information in the two sets of client fingerprint data 34) to determine whether or not the two sets of client fingerprint data 34 match each other. Based at least in part on the client fingerprint data 34 obtained as part of the second client device session matching the client fingerprint data 34 obtained as part of the first client device session, processing circuitry 16 may identify client identifier 32-2 as an updated client identifier replacing client identifier 32-1. Processing circuitry 16 may consequently identify (e.g., include) second client identifier 32-2 (e.g., MAC address 33-2) in the same client profile 30 containing first client identifier 32-1 (e.g., MAC address 33-1). Accordingly, processing circuitry may associate client identifier 32-2 with and store client identifier 32-2 along with the other information in the originally generated client profile 30, such as identifier 32-1 and fingerprint data 34. This update of existing profile 30 to identify client identifier 32-1 may be done in lieu of generating and/or maintaining a new separate client profile 30' that would have included the same client fingerprint data 34 and that would have been duplicative and misleading.

In some illustrative scenarios, processing circuitry 16 may determine that second client identifier 32-2 replaces first client identifier 32-1 and update existing client profile 30 to identify client identifier 32-2 based at least in part on one or more other criteria being satisfied, in addition to or instead of the criteria that is satisfied when the two sets of fingerprint data obtained as part of the first and second client device sessions match each other.

As an example, processing circuitry 16 may determine that second client identifier 32-2 replaces first client identifier 32-1 and update existing client profile 30 to identify client identifier 32-2 based at least in part on MAC addresses 33-2 and/or 33-1 being locally administered MAC addresses (e.g., that are assigned by a network administrator or other user using software and are not universally administered MAC addresses inherently tied to the hardware components of client device 12). In particular, locally administered MAC addresses may follow a particular pattern and/or exhibit specific characteristic(s) (e.g., having a value of '1' at the second least significant bit, is within one or more address ranges reserved for locally administered MAC addresses, etc.). Accordingly, in response to determining that the characteristic(s) of MAC addresses 33-2 and/or 33-1 are indicative of characteristic(s) of locally administered MAC addresses (e.g., for implementing MAC address rotation), processing circuitry 16 may determine that MAC addresses 33-2 and/or 33-1 are locally administered MAC addresses. As additional examples, processing circuitry 16 may determine that second client identifier 32-2 replaces first client identifier 32-1 and update existing client profile 30 to identify client identifier 32-2 based at least in part on a username used to authenticate the first client device session matching the username used to authenticate the second client device session, based at least in part on all session(s) established using client identifier 32-1 (and using all other prior client identifiers) being inactive, and/or based at least in part on any other desired criteria.

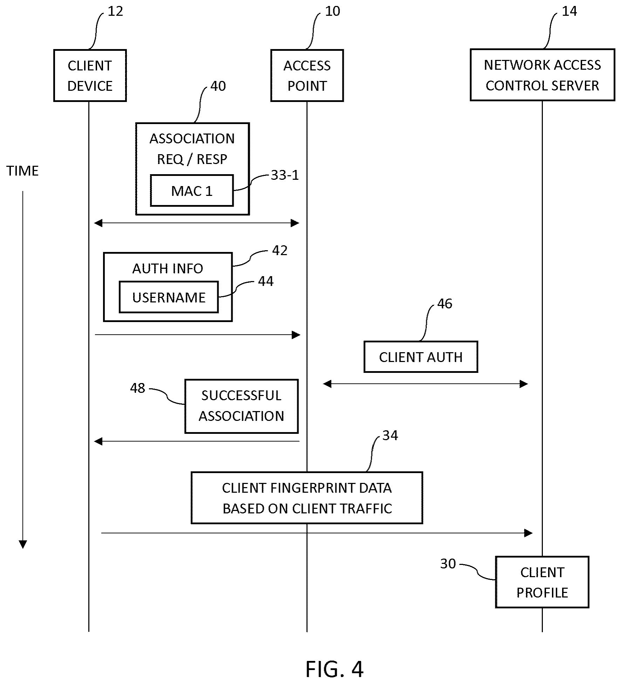

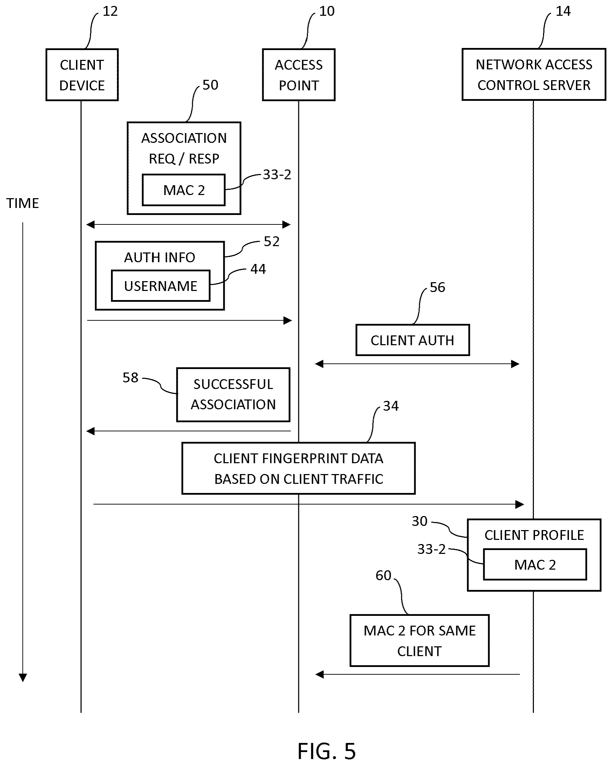

FIGS. 4 and 5 are timing diagrams showing illustrative operations performed in connection with the generation of a client profile (e.g., profile 30 in FIG. 3) and in connection with the updating of the existing client profile to include a new client identifier (associated with the same client device to which the existing client profile corresponds). In particular, FIG. 4 is a timing diagram of illustrative operations performed by client device 12, wireless access point 10, and network access control server 14 (e.g., processing circuitry 16) in connection with a first communication session established using a first client MAC address (e.g., MAC address 33-1). FIG. 5 is a timing diagram of illustrative operations performed by client device 12, wireless access point 10, and network access control server 14 (e.g., processing circuitry 16) in connection with a second communication session established using a second client MAC address (e.g., MAC address 33-2).

As shown in FIG. 4, client device 12 and wireless access point 10 (e.g., processing circuitry 22) may exchange association messages 40. In messages 40, client device 12 may be identified by a first MAC address 33-1, e.g., in the frame header of a message 40 transmitted by device 12 to processing circuitry 22. Client device 12 may subsequently provide, to processing circuitry 22, authentication information 42 in a corresponding message to authenticate for access to network 8 (e.g., via wireless access point 10, serving as the authenticator device). Authentication information 42 may include a username 44 (e.g., indicative of the user of client device 12) and other user and/or client device credentials, such as a password, a user certificate, client device information, etc., for validating the identity of the network accessing user and/or the identity of client device 12.

After receiving MAC address 33-1 and username 44 (and, if desired, other types of authentication information 42), processing circuitry 22 of access point 10 may provide these pieces of received information (e.g., in message(s) 46 for client authentication) to processing circuitry 16 of network access control server 14 (serving as the authentication server). Processing circuitry 16 may validate the user and/or client device identity indicated by authentication information 42 (and/or MAC address 33-1) and may authenticate client device 12 for network access (e.g., for network access without restrictions or with varying levels of restrictions, depending on the user identity and/or client device identity). Accordingly, processing circuitry 16 may provide processing circuitry 22 of access point 10 with an indication that client device 12 should be provided with network access, e.g., in message(s) 46 for client authentication.

Consequently (based on receiving the indication that client device 12 should be provided with network access), processing circuitry 22 of access point 10 may send an indication of successful association (e.g., successful authentication using server 14, grant of network access, etc.) in a corresponding message 48 to client device 12. This may begin an authenticated network access session using MAC address 33-1.

After receiving the user and/or client device information from processing circuitry 22 of access point 10 (e.g., as part of the authentication operations), processing circuitry 16 of server 14 may begin profiling client device 12 (e.g., by identifying MAC address 33-1 in or otherwise associating MAC address 33-1 with a profile for the client device such as profile 30 in FIG. 3, by identifying username 44 and other user credentials in or otherwise associating username 44 and other user credentials with the client profile, etc.).

Additionally, once the network access session is active, client device 12 may transmit, during this active session, network traffic into network 8 (e.g., which passes through access point 10 and is monitored by processing circuitry 22 therein). The transmitted traffic may include messages (e.g., DHCP messages) containing DHCP options and corresponding information specified in the DHCP options, messages (e.g., HTTP messages) sent by an HTTP user agent on device 12 and containing an HTTP user-agent header and corresponding information specified in the header, and/or other messages containing client fingerprint data 34 (e.g., in the message header of these other messages). Processing circuitry 22 of access point 10 may parse these monitored messages and obtain, from within the messages, client fingerprint data 34 (e.g., DHCP option information 36, HTTP user agent information 38, and/or other types of client fingerprint data information). Consequently, processing circuitry 22 may transmit the client fingerprint data 34 obtained from client traffic transmitted during the network access session to processing circuitry 16 of server 14 (e.g., in RADIUS accounting messages or other messages).

Upon receiving client fingerprint data 34 (e.g., in corresponding message from processing circuitry 22 of access point 10), processing circuitry 16 of server 14 may further build client profile 30 based on client fingerprint data 34 (e.g., by populating client profile 30 with client fingerprint data 34, by otherwise associating client fingerprint data 34 with MAC address 33-1 already existing in profile 30, with client profile 30, with a particular user having username 44, etc.). By performing the operations described in connection with FIG. 4, processing circuitry 16 of server 14 may obtain (e.g., generate) the version of client profile 30 in FIG. 3 that contains client identifier 32-1 and client fingerprint data 34 (but lacks client identifier 32-2) and may maintain (e.g., store) this version of client profile 30 on memory circuitry 18 of server 14.

In the example of FIG. 5, at a later time (e.g., after the authenticated network access session described in connection with FIG. 4 has expired and becomes inactive), client device 12 may subsequently use a second different MAC address 33-2 to perform the association and authentication operations with access point 10 (e.g., processing circuitry 22) and server 14 (e.g., processing circuitry 16) to gain network access. The same types of communications as described in connection with FIG. 4 may take place using MAC address 33-2 in FIG. 5 as they did using MAC address 33-1 in FIG. 4.

In particular, client device 12 and processing circuitry 22 of access point 10 may exchange association messages 50. In messages 50, client device 12 may be identified by MAC address 33-2, e.g., in the frame header of a message 50 transmitted by device 12 to processing circuitry 22. Client device 12 may subsequently provide, to processing circuitry 22, authentication information 52 in a corresponding message to authenticate for access to network 8 (e.g., via wireless access point 10, serving as the authenticator device). Authentication information 52 may include a username 44 (e.g., the same username 44 described in connection with FIG. 4) and other user and/or client device credentials, such as a password, a user certificate, client device information, etc., for validating the identity of the network accessing user and/or the identity of client device 12.

After receiving MAC address 33-2 and username 44 (and, if desired, other types of authentication information 52), processing circuitry 22 of access point 10 may provide these pieces of received information (e.g., in message(s) 56 for client authentication) to processing circuitry 16 of network access control server 14 (serving as the authentication server). Processing circuitry 16 may validate the user and/or client device identity indicated by authentication information 52 (and/or indicated by MAC address 33-2) and may authenticate client device 12 for network access. Accordingly, processing circuitry 16 may provide processing circuitry 22 of access point 10 with an indication that client device 12 should be provided with network access, e.g., in message(s) 56 for client authentication.

Consequently (based on receiving the indication that client device 12 should be provided with network access), processing circuitry 22 of access point 10 may send an indication of successful association (e.g., successful authentication using server 14, grant of network access, etc.) in a corresponding message 58 to client device 12. This may begin an authenticated network access session using MAC address 33-2.

After receiving the user and/or client device information from processing circuitry 22 of access point 10 (e.g., as part of the authentication operations), processing circuitry 16 of server 14 may begin profiling client device 12 based on MAC address 33-2. However, instead of generating and maintaining a new client profile 30' associated with MAC address 33-2, processing circuitry 16 of server 14 may consolidate and identify MAC address 33-2 in the existing client profile 30 (already containing MAC address 33-1) generated and maintained as described in connection with FIG. 4. Processing circuitry 16 of server 14 may make a determination to perform this consolidation based at least in part on gathering additional client fingerprint data 34 derived from network traffic from client device 12 during the network access session based on MAC address 33-2.

In particular, once the network access session based on MAC address 33-2 is active, client device 12 may transmit, during this active session, network traffic into network 8 (e.g., which passes through access point 10 and is monitored by processing circuitry 22 therein). The transmitted traffic may include messages (e.g., DHCP messages) containing DHCP options and corresponding information specified in the DHCP options, messages (e.g., HTTP messages) sent by an HTTP user agent on device 12 and containing an HTTP user-agent header and corresponding information specified in the header, and/or other messages containing client fingerprint data 34 (e.g., in the message header of these other messages). Processing circuitry 22 of access point 10 may parse these monitored messages and obtain, from within the messages, client fingerprint data 34 (e.g., DHCP option information 36, HTTP user agent information 38, and/or other types of client fingerprint data information). Consequently, processing circuitry 22 may transmit the client fingerprint data 34 obtained from client traffic transmitted during the network access session to processing circuitry 16 of server 14 (e.g., in RADIUS accounting messages or other messages).

Based on the received client fingerprint data 34 and/or based on the earlier received MAC address 33-2 and other information (e.g., username 44), processing circuitry 16 of server 14 may determine if MAC address 33-2 being for a client device already represented by an existing client profile (e.g., profile 30) based on one or more criteria being met. As described above (e.g., in connection with FIG. 3), the one or more criteria can include a criterion that is met when the session(s) established using MAC address 33-1 (and using any other prior MAC addresses for the same client device) have expired or are inactive, a criterion that is met when one or more, or all, pieces of information from client fingerprint data 34 obtained during the current session matches one or more corresponding pieces of information from client fingerprint data 34 in an existing client profile, a criterion that is met when MAC address 33-2 (and/or MAC address 33-1 identified as potentially referring to the same client device) have characteristics indicative of the MAC addresses being locally administered MAC addresses, and/or other suitable criteria.

In particular, based on the one or more criteria being met, processing circuitry 16 of server 14 may determine that MAC address 33-2 represents the same client device as MAC address 33-1 and should be reflected in (e.g., included in, associated with, etc.) the same existing client profile 30 for client device 12. Accordingly, processing circuitry 16 may update profile 30 to include MAC address 33-2 or otherwise associate MAC address 33-2 with profile 30. By performing the operations described in connection with FIG. 4, processing circuitry 16 of server 14 may obtain (e.g., generate) the version of client profile 30 in FIG. 3 that contains client identifier 32-1, client identifier 32-2, and client fingerprint data 34 and may maintain (e.g., store) this version of client profile 30 on memory circuitry 18 of server 14.

Additionally, after making a determination that MAC address 33-2 is associated with the same client device 12 as MAC address 33-1, processing circuitry 16 of server 14 may provide (e.g., generate and transmit) message(s) 60 that include an indication of MAC address 33-2 being for the same client device 12 as MAC address 33-1, that include an indication that MAC address 33-2 replaces MAC address 33-1 as the new identifier for device 12, and/or that include other client profile information (e.g., information in profile 30) to processing circuitry 22 of access point 10. Based on the client profile information (including the indication(s)), processing circuitry 22 may appropriately manage the network traffic flow during the active session established using MAC address 33-2 (e.g., by using the same settings, such as the same client role information, the same network access restrictions, the same network segmentation information, etc., as used during the session established with MAC address 33-1 in connection with FIG. 4).

Configurations, described above in connection with FIGS. 4 and 5, in which client device 12 communicates with the same access point 10, which communicates with server 14 (e.g., processing circuitry 16 therein) are merely illustrative. If desired, the operations described in connection with FIGS. 4 and 5 may occur with different access points (e.g., in a configuration described in connection with FIG. 1 in which a wireless network is formed by multiple access points 10). In particular, a client device 12 may communicate with a first access point 10, which communicates with server 14 (e.g., processing circuitry 16 therein), in the manner described above in connection with FIG. 4 (e.g., by exchanging the same types of messages and/or information, by performing the same types of processing on server 14, etc.); and a client device 12 (e.g., after roaming from the first access point 10 to a second access point 10) may subsequently communicate with the second access point 10, which communicates with server 14 (e.g., processing circuitry 16 therein), in the manner described above in connection with FIG. 5 (e.g., by exchanging the same types of messages and/or information, by performing the same types of processing on server 14, etc.).

If desired, processing circuitry 22 of access point 10 may forward the received indication of MAC address 33-2 being for client device 12 and/or other client profile information for client device 12 to other network nodes of network 8, instead of or in addition to performing local processing based on the received indication and/or other client profile information.

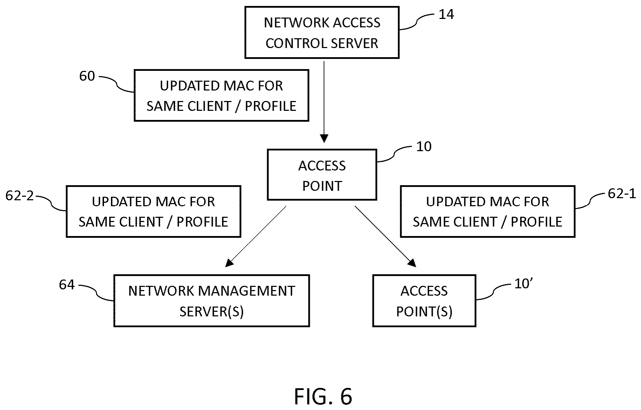

As shown in FIG. 6, after receiving the indication that MAC address 33-2 is for an existing client device 12 having an existing client profile 30 and/or other client profile information in corresponding message(s) 60, processing circuitry 22 of access point 10 may provide (e.g. propagate, forward, etc.) the same information (e.g., the same indication and/or other client profile information) to other network node(s) in network 8 in message(s) 62. As illustrative examples, the other network node(s) may include one or more other wireless access points 10' of network 8 (e.g., one or more wireless access points 10' that are radio-frequency neighbors of access point 10) and/or one or more network management server(s) 64 (e.g., serving as end host(s) of network 8).

In particular, access point(s) 10' may receive the client profile information (including the indication of MAC address change of client device 12) in corresponding message(s) 62-1 from access point 10. The received information may help access point(s) 10' to facilitate (future) communications with client device 12 (when identified by MAC addresses 33-2). As one example, access point(s) 10' may use the received information to connect to client device 12, when client device 12 (identified by MAC address 33-2) roams from access point 10 to an access point 10'.

Network management server(s) 64 may receive the client profile information (including the indication of MAC address change of client device 12) in corresponding message(s) 62-2 from access point 10. Network management server(s) 64 may use the received information to detect issues experienced by client device 12 and/or analyze data for client device 12 based on the session data gathered for the multiple MAC addresses 33-1 and 33-2.

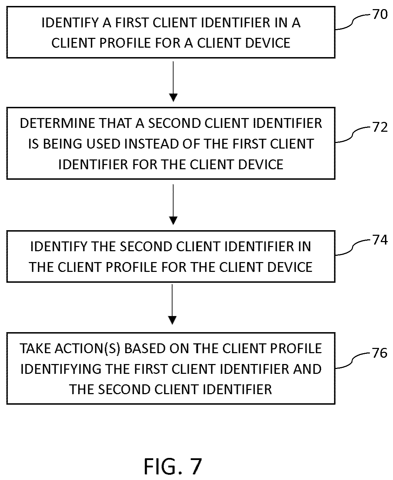

FIG. 7 is a flowchart of illustrative operations for performing consistent client device profiling across client identifier updates (e.g., client MAC address updates for client devices implementing MAC address rotation). In particular, these operations may be performed by processing circuitry of a client device profiling system (e.g., processing circuitry 16 of server 14 in FIG. 1) using other components of the client device profiling system (e.g., memory circuitry such as memory circuitry 18 of server 14, network interfaces, user interfaces, and/or other types of interfaces of server 14, etc.). In configurations described herein as an illustrative example, the operations described in connection with FIG. 7 may be performed by processing circuitry of the client device profiling system (e.g., processing circuitry 16) executing software instructions stored on memory circuitry of the client device profiling system (e.g., memory circuitry 18, including one or more non-transitory computer-readable storage media). If desired, one or more operations described in connection with FIG. 7 may be performed by other (dedicated) hardware components in the client device profiling system.

If desired, in addition to or instead of processing circuitry 16 and memory circuitry 18 of server 14, processing circuitry and memory circuitry of any suitable types of devices and/or computing equipment may be configured to perform the operations described in connection with FIG. 7.

At block 70, processing circuitry of a client device profiling system (e.g., processing circuitry 16 of server 14) may identify a first client identifier (e.g., a first MAC address) in a client profile for a client device. In particular, the processing circuitry may generate a client profile that includes or otherwise identifies a first client identifier and client fingerprint data (e.g., derived from session data during communication session(s) established using the first client identifier). The processing circuitry may store the client profile on corresponding memory circuitry of the client device profiling system.

At block 72, the processing circuitry may determine that a second client identifier (e.g., a second MAC address) is being used instead of the first client identifier for the client device. In particular, the processing circuitry may obtain a second client identifier (e.g., as part of a client authentication operation) and determine that an updated second client identifier is used by the client device (previously using the first client identifier) based on one or more criteria being met. The one or more criteria may include a criterion that is met when client fingerprint data associated with communication session(s) established using the second client identifier matching corresponding client fingerprint data of an existing client profile (e.g., client fingerprint data associated with communication session(s) established using the first client identifier), a criterion that is met when one or both of the first and second client identifiers include characteristic(s) of locally administered client identifiers, a criterion that is met when communication session(s) established using the first client identifier (and any other identifiers of the client device) being no longer active, and/or other criteria.

At block 74, the processing circuitry may identify the second client identifier in the profile for the client device. In particular, the processing circuitry may update the existing client profile (already including or identifying the first client identifier) to include or identify the second client identifier based on the determination made at block 72.

As described in connection with blocks 70 and 72, the processing circuitry of the client device profiling system may obtain the first and second client identifiers for the client device. While, in some configurations described herein, the first and second client identifiers for the client devices may be obtained by the processing circuitry of the client device profiling system from the same access point (e.g., as described in connection with FIGS. 4 and 5, as part of two client authentication operations with the same access point 10), these configurations are merely illustrative. If desired, the processing circuitry of the client device profiling system may obtain the first and second client identifiers from different access points (e.g., as part of a first client authentication operation with a first access point and as part of a second client authentication operation with a second access point, both performed for the same client device whose client identifier changed between the two client authentication operations). As an example, client device roaming may have occurred to cause the same client device to connect to (e.g., authenticate via) the first access point at a first time and to connect to (e.g., authenticate via) the second access point at a second time.

Still referring to FIG. 7, at block 76, the processing circuitry may take one or more actions based on the client profile identifying the first client identifier and the second client identifier. As just a few examples, the processing circuitry may aggregate (e.g., consider) session data from communication sessions established using both the first and second client identifiers when performing analysis (e.g., a network issues root cause analysis) involving the client device, may provide output (e.g., an indication of the second client identifier being an updated client identifier of the client device) to external equipment (e.g., to access point 10, directly to access point 10' without intervening access point 10, directly to network management server 64 without intervening access point 10, etc.) based on the client profile, may provide client profile information as user output (e.g., via a user interface), and/or may perform other actions based on the client profile.

The methods and operations described above in connection with FIGS. 1-7 may be performed by the components of network device(s) and/or server(s) or other host equipment using software (including firmware) and/or hardware (e.g., dedicated circuitry or hardware). Software code for performing these operations may be stored on one or more non-transitory computer-readable storage media (e.g., tangible computer-readable storage media) stored on one or more of the components of the network device(s) and/or server(s) or other host equipment. The software code may sometimes be referred to as software, data, instructions, program instructions, or code. The non-transitory computer-readable storage media may include drives, non-volatile memory such as non-volatile random-access memory (NVRAM), removable flash drives or other removable media, other types of random-access memory, etc. Software stored on the non-transitory computer readable-storage media may be executed by processing circuitry of the network device(s) and/or server(s) or other host equipment (e.g., processing circuitry 16 of server 14 in FIG. 1, processing circuitry 22 of wireless access point 10 in FIG. 2, etc.).

In accordance with an embodiment, a client device profiling system includes memory circuitry, and processing circuitry coupled to the memory circuitry and configured to obtain a first client identifier of a client device communicatively coupled to a wireless access point, obtain client fingerprint data based on client network traffic transmitted by the client device during a network access session established using the first client identifier, store, on the memory circuitry, a client profile that includes the first client identifier and the client fingerprint data, identify a second client identifier used by the client device, and update the stored client profile to include the second client identifier.

In accordance with another embodiment, the first client identifier is optionally a first Media Access Control (MAC) address and the second client identifier is optionally a second MAC address.

In accordance with another embodiment, the first MAC address is optionally a first locally administered MAC address and the second MAC address is optionally a second locally administered MAC address that replaces the first locally administered MAC address as part of a MAC address update periodically performed by the client device.

In accordance with another embodiment, the second MAC address is optionally identified to be used by the client device based at least in part on the second MAC address exhibiting one or more characteristics of locally administered MAC addresses.

In accordance with another embodiment, the second client identifier is optionally identified to be used by the client device based at least in part on the network access session established using the first client identifier being inactive.

In accordance with another embodiment, the processing circuitry is optionally configured to obtain additional client fingerprint data based on additional client network traffic transmitted by the client device during an additional network access session established using the second client identifier and the second client identifier is optionally identified to be used by the client device based at least in part on the client fingerprint data and the additional client fingerprint data.

In accordance with another embodiment, the network access session is optionally an authenticated network access session, where the processing circuitry is optionally configured to obtain the first client identifier as part of a network access authentication operation that establishes the authenticated network access session, the additional network access session is optionally an additional authenticated network access session, and the processing circuitry is optionally configured to obtain the second client identifier as part of an additional network access authentication operation that establishes the additional authenticated network access session.

In accordance with another embodiment, the processing circuitry is optionally configured to output, to external equipment, an indication of the second client identifier being used by the client device.

In accordance with an embodiment, a method for client device profiling, the method includes storing a client profile that identifies a first client identifier for a client device, the first client identifier being used by the client device to communicatively couple to a wireless access point for a network access session, determining that a second client identifier replaced the first client identifier as an identifier for the client device, and updating the stored client profile to identify the second client identifier.

In accordance with another embodiment, the first and second client identifiers are optionally Media Access Control (MAC) addresses.

In accordance with another embodiment, the second client identifier is optionally determined to have replaced the first client identifier based on one or more criteria being met.

In accordance with another embodiment, the one or more criteria optionally include a criterion that is met when the network access session is inactive.

In accordance with another embodiment, the method optionally includes obtaining first client fingerprint data gathered during the network access session, the stored client profile identifies the first client fingerprint data, the second client identifier is used by the client device to communicatively couple to the wireless access point for an additional network access session, and the one or more criteria include a criterion that is met when second client fingerprint data gathered during the additional network access session matches the first client fingerprint data identified in the stored client profile.

In accordance with another embodiment, the first and second client fingerprint data each optionally include Dynamic Host Configuration Protocol (DHCP) option information.

In accordance with another embodiment, the DHCP option information optionally includes information specified in at least one of DHCP option 12, DHCP option 55, or DHCP option 60.

In accordance with another embodiment, the first and second client fingerprint data each optionally include Hypertext Transfer Protocol (HTTP) user agent information.

In accordance with another embodiment, the second client identifier is optionally used by the client device to communicatively couple to an additional wireless access point for an additional network access session.

In accordance with an embodiment, a server includes memory circuitry, and processing circuitry coupled to the memory circuitry and configured to store a client profile that identifies a first Media Access Control (MAC) address for a client device and that identifies client fingerprint data for the client device obtained based on network traffic transmitted by the client device, obtain a second MAC address, based on the second MAC address being an updated MAC address for the client device, update the client profile to include the second MAC address, and output, to external equipment, an indication that the second MAC address is the updated MAC address for the client device.

In accordance with another embodiment, the external equipment is optionally a wireless access point to which the client device is communicatively coupled using the first MAC address during a first time period and to which the client device is communicatively coupled using the second MAC address during a second time period.

In accordance with another embodiment, the server is optionally configured to authenticate the client device for network access at a first time based on the first MAC address and authenticate the client device for network access at a second time based on the second MAC address.

The foregoing is merely illustrative and various modifications can be made to the described embodiments. The foregoing embodiments may be implemented individually or in any combination.

## Claims

1. A client device profiling system comprising:
memory circuitry; and
processing circuitry coupled to the memory circuitry and configured to:
obtain a first client identifier of a client device communicatively coupled to a wireless access point;
obtain client fingerprint data based on client network traffic transmitted by the client device during a network access session established using the first client identifier;
store, on the memory circuitry, a client profile that includes the first client identifier and the client fingerprint data;
identify a second client identifier used by the client device; and
update the stored client profile to include the second client identifier.

2. The client device profiling system defined in claim 1, wherein the first client identifier is a first Media Access Control (MAC) address and wherein the second client identifier is a second MAC address.

3. The client device profiling system defined in claim 2, wherein the first MAC address is a first locally administered MAC address and wherein the second MAC address is a second locally administered MAC address that replaces the first locally administered MAC address as part of a MAC address update periodically performed by the client device.

4. The client device profiling system defined in claim 2 or claim 3, wherein the second MAC address is identified to be used by the client device based at least in part on the second MAC address exhibiting one or more characteristics of locally administered MAC addresses.

5. The client device profiling system defined in any preceding claim, wherein the second client identifier is identified to be used by the client device based at least in part on the network access session established using the first client identifier being inactive.

6. The client device profiling system defined in any preceding claim, wherein the processing circuitry is configured to obtain additional client fingerprint data based on additional client network traffic transmitted by the client device during an additional network access session established using the second client identifier and wherein the second client identifier is identified to be used by the client device based at least in part on the client fingerprint data and the additional client fingerprint data.

7. The client device profiling system defined in claim 6, wherein the network access session is an authenticated network access session, wherein the processing circuitry is configured to obtain the first client identifier as part of a network access authentication operation that establishes the authenticated network access session, wherein the additional network access session is an additional authenticated network access session, and wherein the processing circuitry is configured to obtain the second client identifier as part of an additional network access authentication operation that establishes the additional authenticated network access session.

8. A method for client device profiling, the method comprising:
storing a client profile that identifies a first client identifier for a client device, the first client identifier being used by the client device to communicatively couple to a wireless access point for a network access session;
determining that a second client identifier replaced the first client identifier as an identifier for the client device; and
updating the stored client profile to identify the second client identifier.

9. The method defined in claim 8, wherein the first and second client identifiers are Media Access Control (MAC) addresses.

10. The method defined in claim 8 or claim 9, wherein the second client identifier is determined to have replaced the first client identifier based on one or more criteria being met.

11. The method defined in claim 10, wherein the one or more criteria include a criterion that is met when the network access session is inactive.

12. The method defined in claim 10 or claim 11 further comprising:
obtaining first client fingerprint data gathered during the network access session, wherein the stored client profile identifies the first client fingerprint data, wherein the second client identifier is used by the client device to communicatively couple to the wireless access point for an additional network access session, and wherein the one or more criteria include a criterion that is met when second client fingerprint data gathered during the additional network access session matches the first client fingerprint data identified in the stored client profile.

13. The method defined in claim 12, wherein the first and second client fingerprint data each comprise at least one of Dynamic Host Configuration Protocol (DHCP) option information or Hypertext Transfer Protocol (HTTP) user agent information.

14. The method defined in claim 13, wherein the DHCP option information includes information specified in at least one of DHCP option 12, DHCP option 55, or DHCP option 60.

15. The method defined in any of claims 8 to 14, wherein the second client identifier is used by the client device to communicatively couple to an additional wireless access point for an additional network access session.
